# EUROPEAN PATENT APPLICATION

(11) **EP 1 566 296 A1**
(43) Date of publication of application: **24.08.2005**
(21) Application number: 04381002.7
(22) Date of filing: 23.02.2004
(51) Int. Cl.: B60J 1/20, B60J 7/00

(54) **Sun screen device for vehicles**

(71) Applicant: GRUPO ANTOLIN-INGENIERIA, S.A., 09007 Burgos (ES)
(72) Inventor: Gonzales Saiz, José Ignacio, 09007, BURGOS (ES)
(74) Representative: Esteban Perez-Serrano, Maria Isabel

(57) **Abstract**

The present invention refers to a sun screen device for vehicles in which glazed areas are present and therefore allow the sun's rays to pass. The device is intended to establish a barrier against the passage of the sun's rays in the area to be protected by means of extending a curtain. The curtain includes optionally on its end a sunshade in such a way that when the curtain is fully extended the sunshade is arranged in the manner of a visor on the upper part of the windshield. A special configuration of guide rails, pulleys and cable routers allows that in all degrees of extension of the curtain the main rod is perpendicular to the guide rails and the braking force is constant and controlled.

## Description

### OBJECT OF THE INVENTION

The present invention relates to a sun screen device for vehicles in which either the roof is not opaque and therefore allows the sun's rays to pass, or it is applicable to any glazed surface such as the case of vehicles with large side windows: train carriages, caravans, etc.

The device is intended to establish a barrier against the sun's rays passing in the area to be protected by means of extending a curtain. The curtain includes optionally on its end a sunshade so that when the curtain is fully extended the sunshade is arranged by way of a visor on the upper part of the windshield.

This invention is characterised in a special configuration of guide rails, pulleys and cable routers such that in the operation of extending the curtain with the sunshade, both when carried out manually and when motor-driven, a controlled braking force is applied in all degrees of the curtain extension.

Likewise, the assembly assures in each of these degrees of extension that the main bar which is located between the guide rails is always perpendicular to the latter. Furthermore, the assembly allows the driving force on the bar to be applied at any point of its length, guaranteeing perpendicularity to the guide rails.

### BACKGROUND OF THE INVENTION

Curtain devices are known which establish a barrier against the sun's rays passing in vehicle roofs based on the incorporation of two lateral guide rails between which is mounted a transversal rod joined to the end of the curtain opposite to that of the take-up roller.

The displacement of the transversal rod from the curtain winding roller to the opposite end of the guide rails brings about the extension of the curtain; however, in the cases known in the state of the art, the means which assure the perpendicularity of the transversal rod with respect to the guide rails are not sufficient to maintain true perpendicularity in any position of the extension and under the extension or retraction force also applied at any point of the rod.

From among the patent documents which disclose protective barriers against the passing of the sun's rays through the roof, is to be found the patent with publication number US4674789 in which a general outline of a combination of a sliding and opaque element combined with a visor is described which is capable of rotating after the sliding element has been extended to cover the upper part of the windshield.

Of this sliding element no means is described to assure the perpendicularity of the outermost bar with its guide rails since the sliding element is a panel which offers certain stiffness and therefore it is sufficient to establish an adequate guidance for its edges. It has no retraction roller and therefore no transversal bar which assures a correct extension.

In the patent with publication number US5560668 a sun filtering and shading device is described comprising an extendable curtain which has on the end a transversal bar which allows the correct extension of the curtain. This rod is guided externally with some extendable elements which allow guide rails to be used which are not necessarily parallel to the side edges of the curtain. This configuration therefore only assures the correct position of the rod for tensioning the curtain. The solution of guide rails and tensors is specially conceived for a special configuration comprising the use of shoes which enter the guide rails in a non-perpendicular position, in particular divergent.

A different situation is that described in the patent with publication number US6186587 wherein a barrier blind is presented against the passing of the sun's rays in vehicles with non-opaque roofs based on the extension of a curtain tensioned by a bar transversal to the guide rails and which has shoes with a configuration coincident with the section of the guide rails.

In this case, the perpendicularity of the transversal bar can only be assured by the curtain and the form adopted for the shoes, so, in situations like that of manual retraction by applying the force in a non-centred point it is only the shoes which could assure the perpendicularity, it being possible for jamming to take place.

Also, in this particular solution, the braking of the assembly is achieved from the friction of several transversal ribs which are supported in some guide rails being forced to bend.

Achieving the perpendicularity between the bar for extending the curtain and the lateral guide rails is one of the problems it is sought to resolve, at least partially, by the technical solutions disclosed in the aforementioned patent documents. Also mentioned is the patent with publication number DE19910830 wherein this perpendicularity is sought by tensioning the curtain by means of some lateral cables which establish a closed loop on one side and the other, both independent.

The bar is now a guided panel in which there is no means which assures perpendicularity with respect to these guide rails.

It is likewise necessary to mention the kinematic solution known in the construction of drawing boards which make use of a horizontal ruler which always remains parallel to one of the longer horizontal edges. In these rulers two lateral cords or cables are used which reach the edges of the ruler.

On these edges there are two pulleys per end in which the cord changes side and crosses over in the middle. Tensioning in the cables is important since slipping can occur which gives rise to the loss of parallelism.

The present invention establishes a different configuration which manages to unify at least several objectives: assuring the perpendicularity of the curtain traction bar with respect to the guide rails in any point (even though the guide rails have a certain degree of curvature), establish a level of braking with regard to the extension and retraction of the assembly independently of the operating mode, and furnish a configuration with a very reduced thickness.

### DESCRIPTION OF THE INVENTION

The present invention relates to a sun screen device for vehicles specially conceived to establish a barrier against the passing of the sun's rays, for example, in vehicles which incorporate a non-opaque roof or at least an overhead window.

The area which the device has to cover is mainly that of the roof and secondarily the upper part of the windshield without this implying that the distinction between roof and windshield has to be clear, for example, because the roof is constituted totally or partially as a continuation of the windshield without any transition area.

The area of the roof is covered by a curtain and the area which corresponds to the upper part of the windshield is covered, in the event of being included, by a sunshade by way of a visor.

The main structure of the device is formed by two parallel guide rails between which is interposed a winding roller for the curtain. This roller is located on the rear ends of the guide rails taking as reference the final position after its installation in the vehicle.

In any case, if the device is intended for a train window or a similar area to be protected, the end where the winding roller is located will be considered as the rear end and the opposite one will be the front end for positional reference purposes throughout the text.

On the edge of the outer end of the curtain a rod is joined which serves to maintain the curtain in tension when the latter is totally or partially extended. The tension is due to the constant tendency of the roller to wind in the curtain.

It is the ends of the rod which are anchored and steered by the lateral guide rails by means of some shoes which assure perpendicularity to the corresponding guide thereof in any position of curtain extension.

In turn, the ends of the guide rails opposite the roller have some pulleys which serve to pass two cables, one on each side of the device, mounted in the following manner: the end of each cable is joined to a different end of the rod (each cable on one end), they pass behind the roller driven independently by means of two routers one being located on each guide rail; and the other end of each cable, after passing round the pulley corresponding to it reaches the opposite end of the rod.

With this configuration, in the extending or retracting of the curtain, the lengthening or shortening of one end is offset with the shortening or lengthening of the opposite end which takes place on the opposite side of the rod both cables maintaining a constant tension.

The passing of the cable over the pulleys and through the routers involves a frictional force depending mainly on the following parameters:
The radius of the pulleys,
The radius of curvature of the routers,
The tension in the cable.

The first two are adjusted in the design of the device and the last during assembly.

Thus a braking force is achieved in any position which is independent of the operating mode. By adequately adjusting this braking force, once the curtain has been partially extended to a certain point, the latter remains stable in this position.

It is possible to maintain the tension in the cable approximately constant independently of its position and of the wear in the different pieces by including a spring on the end of the actual cable. The integration of this spring inside the shoe results in a compact device with protected moving elements.

With this configuration, the perpendicularity of the rod with respect to the guide rails, in any position of curtain extension, is therefore due to the simultaneous convergence of:
A set of two cables configured by means of routers y pulleys to assure the position of the two end points of the rod with respect to the guide rails,
The incorporation of two end shoes configured with sufficient length so that there is no movement of misalignment with respect to the guide rail at one end and the other.

The outcome of operating these two mechanisms together is to assure perpendicularity of the bar with respect to the guide rails even though the action of extending or retracting is carried out by applying force to an off-centre point of the rod.

The end of the rod includes optionally a sunshade in such a way that, after extending the curtain, it rotates to cover the upper part of the windshield by way of a visor; and, on retraction it is displaced under the curtain remaining located in the rearmost position of the device.

Situations exist in which the area to be covered with the sun screen has certain restrictions in space which condition and limit the passage of cables.

A way of implementing this invention consists in incorporating in one or more free lengths of the cable a sleeve which allows the cable to slide through the inside thereof following a curved path.

The sleeve has its ends anchored on the pieces between which it is mounted, for example, the routers or the actuator.

In the event that the actuator is a motor, this can be incorporated only on one of the cables, preferably in the length which connects the two routers on the rear part of the roller.

In the event of including sleeves on the free lengths which reach the motor, the sleeves allow the motor to be located in emplacements which would not be possible without said sleeves and without the cables losing tension.

The guidance by means of sleeves allows the spring of the shoe to be sufficient to assure adequate tension in the cables.

Lastly, it is also mentioned that in the event of including two devices like that of the invention in a vehicle, one for each occupant, the two adjacent guide rails can be formed by a single structure which includes pulleys and routers for one curtain and the other.

The set of pieces which constitutes the device object of the invention is assembled outside the vehicle. It can be mounted independently or together with the other components of the vehicle before the assembling thereof on the same; that is, the device is self-supporting, which allows logistical optimisation in the event of it being mounted with other components since it permits the transport thereof in an independent manner.

### DESCRIPTION OF THE DRAWINGS

The present descriptive specification is supplemented with a set of drawings which illustrate but do not restrict a preferred embodiment of the invention.

Figure 1 shows a top view of a first embodiment of the invention wherein the main pieces are shown which constitute the curtain device including the sunshade.

Figure 2 is a view in perspective of the same device with the curtain extended and the sunshade turned to the position which it would adopt when covering the upper part of the windshield.

Figure 3 is a detail of the junction of the rod or transversal bar with the guide rail, the curtain winding roller, the joining of the cables to the shoe and the router for changing the direction of the tensioning cables.

Figure 4 is a schematic of the arrangement and connection of the cables.

Figure 5 is a top view of a second embodiment of the invention wherein the central guide rail between two devices is a shared structure; and, is driven by a motor.

Figure 6 is a series of three views of the detailed configuration of the shoe with the ends of the cables which reach it, the same shoe without the cables, and the latter alone without the shoe. It also includes a section of the guide rail and the shoe enclosing it.

Figure 7 is a partial top view of a third embodiment of the invention in which some free lengths of cable have a sleeve for guidance.

Figure 8 is a view in perspective of a joining detail of an embodiment of the router with the guidance sleeves.

### DETAILED EXPLANATION OF METHODS OF EMBODIMENT

### First example of embodiment.

Figure 1 shows a first example of embodiment of the sun screen device for vehicles according to the invention.

In this figure 1 a top view is shown in which the main pieces are distinguished which constitute the device according to this first example.

The device comprises two lateral guide rails (4) in which there is a winding roller (1) for a curtain (1.1) on one end that which corresponds to the rear part of the vehicle when installed.

The outer end of the curtain (1.1) is firmly joined to a transversal bar (2) (which hereinafter will be identified as rod) such that by means of the special configuration of this invention perpendicularity is assured at all times between the rod (2) and the guide rails (4).

In both ends of the transversal rod (2) are some shoes (3) which allow the rod (2) to slide on the guide rails maintaining perpendicularity with respect to these.

The perpendicularity of the rod (2) with respect to the guide rail (4) is achieved through the width of the shoe (3) which encloses the guide rail (4). In figures 3 and 6 a configuration is identified in the guide rail (4), twice bent and enclosed by the shoe (3) with a coincident configuration. In this example, the width (a) of the shoe (3) is of the same order as the width of the rod (2), this, together with the support of the shoe on its outer part on the guide (4) is sufficient to prevent tilting with respect to the guide rail (4) in such a way that perpendicularity is assured between the rod (2) and the guide rail (4).

In this same figure 3, together with the details of figure 6, the particular configuration of the shoe (3) is identified, chosen for this example of embodiment in which there is a hole (3.1) with a flat spring which presses internally against the guide rail to prevent noise and to absorb play.

The union between the shoe (3) and the rod (2) is established by means of a boss (3.5) which forms part of the shoe (3) and which penetrates the tubular profile of the rod (2).

Also, the shoe (3) has two additional cavities communicating with the externally arranged face by means of channels.

One of the cavities (3.2) allows the entry of a retention latch (3.2.1) (hereinafter termed retainer) of the end of one of the cables (6.1) the exit of which is precisely through the channel toward the external face; and the other cavity (3.3) houses the termination of the other cable (6.2).

This other termination of cable (6.2), in this example of embodiment, includes a coiled spring (3.4) to assure the tension, such spring (3.4) being supported on a washer (3.4.2) which in turn rests on a nut (3.4.1) which allows the adjustment of this tension. Details are shown in figure 6 wherein the cables (6.1 and 6.2) are represented together with the spring (3.4), the retainer (3.2.1), with and without a shoe (3), and the last (3) free of such elements.

In the detail of figure 3, one of the two routers (8) is shown intended to facilitate and guide the change of direction of the cables (6.1 and 6.2) so that they pass behind the winding roller (1).

By means of a step in the router (8) the support of one cable (6.1) is differentiated from the other (6.2) so that when sliding they do not touch each other.

On the opposite side of the routers (8) there are some pulleys which tighten, redirect and reduce the friction for the passing of one cable (6.1) and the other (6.2).

Although in this preferred embodiment use has been made of routers (8) on the front part and pulleys (7) on the rear part of the device, a pulley is simply a router since it allows the change of direction of the cable and reduces the frictional force. For this reason it is possible to consider within the same invention the use indistinctly of routers based on passing the cable by friction and of pulleys at any of the points in which in this embodiment there is one or the other. For the same reason it is justified to speak in generic terms only of routers.

In figure 2 one of the guide rails (4) is represented with the curvature necessary to adapt to the configuration of the roof on which it is installed.

In this same figure 2, the curtain (1.1) is fully extended and the sunshade (5) deployed until adopting the position it requires to cover the upper part of the windshield not shown here.

Figure 4 shows schematically the arrangement and joining of the cables (6.1 and 6.2).

In this figure only the routers (8), the pulleys (7), the winding roller (1), the rod (2) with its two shoes (3) on one and the other end as well as the cables (6.1, 6.2) differentiated by the thickness only for the purpose of identifying one (6.1) and the other (6.2) are represented schematically .

According to this schematic and considering, for example, the cable (6.2) identified by means of a thicker line, the latter (6.2) at one of its ends leaves the shoe (3) represented on the left and which is joined by means of the fixed anchoring retainer (3.2.1) (not shown here).

The cable (6.2) is prolonged until reaching the router (8) located on the end of the guide rail (4) near the winding roller (1), it turns and passes behind the roller (1) to the router (8) of the other guide rail (4) where it again turns and is prolonged to the pulley (7) located on the end opposite to the roller (1).

After turning on this pulley (7), the cable (6.2) reaches the shoe (3) of the end opposite to the starting point where the tensor (3.4) is located.

If the retracting of the curtain (1.1) is considered, the length between the shoe (3) and the router (8) on the left is shortened, the cable (6.2) being displaced toward the other side, the right. This length of cable (6.2) which has been displaced corresponds to the length which is prolonged established between the right shoe (3) and the right pulley (7).

The final configuration includes two cables (6.1, 6.2) mounted in an operatively symmetrical configuration in such a way that what is retracted of the cable through the rear part is delivered by the front part but on the opposite side, whereby the same displacement is always assured on one side and the other. The outcome is a rod (2) on which perpendicularity is assured with respect to the lateral guide rails (4).

The configuration is said to be operatively symmetrical because operatively there is a compensation of like magnitude in the lengths of cable drawn in and fed out at one and the other side of the rod, and this not purely geometric symmetry is not deemed to be affected in this invention by the presence of loops in one of the cables for the motorization or because one (6.1) and the other (6.2) cable lie on not strictly parallel planes.

### Second example of embodiment.

A second example of embodiment envisages the arrangement of two devices like those of the invention located one beside other as they would be installed in the event of including one for the driver and another for the passenger.

This second example is shown represented in figure 5 where one of the curtains (1.1) is visualized completely and only an end of the second curtain (1.2) so that, between one and the other two adjacent guide rails (4) have to be located.

In this case, the two adjacent guide rails (4) constitute a single body which on one end supports the pulleys (7) and on the other one the routers (8).

In this example, the pulleys (7) which tense the cable of one curtain (1.1) and of the other (1.2) are superimposed to occupy less space. Since it is a top view, only the upper pulley (7) is visible.

There is also another change with respect to the first example in the routers (8) since in this case use has been made of pulleys to change the direction of the cables (6) reducing the braking effort on the assembly.

Lastly, behind the winding roller (1), the drive motor (9) is located which in this case only operates on one of the cables (6) since the configuration assures that by acting on one of them perpendicularity is not lost. This does not mean that the same shaft of the motor (9) cannot act on one cable (6.1) and the other (6.2) simultaneously.

### Third example of embodiment.

A third example of embodiment of the invention envisages a device capable of being installed in emplacements with spatial restrictions which require the cables (6) to follow curved, instead of straight trajectories.

On the free lengths of cable (6) where it is required that the latter run according to a curved path, a sleeve (10) is included. The relative stiffness of the sleeve with respect to the cable signifies a restriction in the movement of the cable in such a way that the latter can only slide through its interior without losing the tension of the spring (3.4) of the shoe (3) and always maintaining the directrix of the cable (6) coincident with the main directrix of the sleeve (10). The sleeve (10) imposes a trajectory on the cable (6) without altering the distance to be travelled, hence the tension in the cable (6) is not affected. It is likewise possible to include sleeves (10) on lengths which will be straight, providing a greater degree of protection for the cable (6).

Figure 7 shows a detail of the part of the device around the winding roller (2) and which makes use of a motor (9) as actuator. It can be observed how the sleeve (10) allows the cable to follow a curved trajectory.

In figure 8 the left router (8) is shown in enlarged detail, wherein the union (8.1) is represented between the sleeve (10) and the left router (8). This union is implemented in this embodiment by means of a pincer configuration (8.1) which benefits the securing of the intake of the cable (6) to the router (8) which encloses the end of the sleeve (10). The coupling has to be such that the end of the sleeve (10) remains immobilized with respect to the pieces which it connects. In the event of coupling to the casing, where the motor (9) is to be found, this is carried out by means of an intermediate securing piece (10.1) intended to assure this fastening.

The essential nature of this invention is not altered through variations in materials, form, size and arrangement of the component elements, described in a non-restrictive manner, sufficient for an expert to proceed to the reproduction thereof.

## Claims

1. Sun screen device for vehicles, of among the curtain devices intended to establish a barrier against the passing of the sun's rays in the glazed areas of vehicles, **characterised in that** it comprises two lateral guide rails (4) between which is mounted on one end, a winding roller (1) for the curtain (1.1), said curtain (1.1) being joined at its end free to a rod (2) transversal to the guide rails (4) for its extension, where the rod (2) incorporates two simultaneous means of maintaining perpendicularity at all points with respect to the lateral guide rails (4) and a controlled braking, these being as follows:
some shoes (3) on one end and the other of the rod (2) not capable of tilting with respect to the guide rail (4),
two cables (6) in operatively symmetrical configuration, each one with an end joined to a shoe (3) and the other end joined to the other shoe (3), guided in their intermediate part by routers (8), in such to way that in the displacement of the rod (2), what is drawn in of cable (6) on one end is paid out in the opposite end of the bar (2),
the assembly being motor-driven or operated manually.

2. Sun screen device for vehicles according to claim 1 **characterised in that** the shoe (3) has a profile coincident with the profile of the guide rail (4).

3. Sun screen device for vehicles according to claim 1 **characterised in that** the shoe (3) incorporates two cavities (3.2, 3.3) for the securing of the ends of the cables (6).

4. Sun screen device for vehicles according to claim 3 **characterised in that** the shoe (3), of the two cavities (3.2, 3.4) which it incorporates, in one cavity (3.2) a latch or retainer (3.2.1) is received for securing the end of a cable (6.1, 6.2) and in the other cavity (3.3) a tensioning spring (3.4) is housed.

5. Sun screen device for vehicles according to claim 4 **characterised in that** the tension in the traction spring (3.4) of the cable (6) is adjusted by means of a nut (3.4.1) mounted on the end of the cable (6).

6. Sun screen device for vehicles according to claim 1 **characterised in that** the shoe (3) incorporates a cavity (3.1) with a flat spring for the reduction of noise and absorption of play.

7. Sun screen device for vehicles according to claim 1 **characterised in that** the intermediate guidance of each of the cables (6) is carried out by means of two routers mounted on the front end of each guide rail (4) and two routers (8) mounted on the rear ends of the guide rails (4).

8. Sun screen device for vehicles according to claim 7 **characterised in that** each cable (6) is arranged so the one end is joined to a shoe (3), is prolonged to the router (8) located in the same guide rail of the shoe (3), continues to the other router (8) passing behind the roller (1) to be prolonged subsequently parallel to the second guide (4) on the opposite side to the router of the rear end of the guide rail (4) where it turns to reach the other shoe (3).

9. Sun screen device for vehicles according to claim 7 **characterised in that** the router (8) is a stepped piece for the sliding passage of one (6.1) and the other (6.2) cable without mutual contact.

10. Sun screen device for vehicles according to claim 7 **characterised in that** one or the two routers (8) located at the front is a pulley.

11. Sun screen device for vehicles according to claim 7 **characterised in that** one or the two routers located at the rear is a pulley (7).

12. Sun screen device for vehicles according to claim 1 **characterised in that** in the installation of two curtain assemblies (1.1), the adjacent guide rails form a single body.

13. Sun screen device for vehicles according to claim 12 **characterised in that** in the installation of two curtain assemblies (1.1), the pulleys of one and the other assembly are located superimposed.

14. Sun screen device for vehicles according to claim 1 **characterised in that** the guide rails (4) have a curvature which adapts to the configuration of the roof of the vehicle.

15. Sun screen device for vehicles according to claim 1 **characterised in that** it includes a motor (9) which operates driving the cables (6) being located behind the winding roller (1).

16. Sun screen device for vehicles according to claim 15 **characterised in that** the motor (9) only drives one of the cables (6).

17. Sun screen device for vehicles according to claim 1 **characterised in that** it is operated manually.

18. Sun screen device for vehicles according to claim 1 **characterised in that** the bar (2) incorporates an sunshade (5) which covers the upper part of the windshield when deployed.

19. Sun screen device for vehicles according to claim 1 **characterised in that** the union between the shoe (3) and the rod (2) is established by means of a boss (3.5) which emerges from the shoe (3) and penetrates the tubular profile of the rod (2).

20. Sun screen device for vehicles according to claim 1 **characterised in that** on one or more free lengths of the cables (6) a sleeve (10) is incorporated with the ends immobilized with respect to the elements which it connects.

21. Sun screen device for vehicles according to claim 20 **characterised in that** the union between the end of the sleeve (10) and the router (8) for the relative immobilization between one and the other is implemented by means of a pincer configuration (8.1) at the intake of the cable (6) into the router (8).

22. Sun screen device for vehicles according to claim 20 **characterised in that** the union between the end of the sleeve (10) and the casing of the motor (9) for the relative immobilization between one and the other is implemented by means of a securing intermediate piece (10.1).
